# EUROPÄISCHE PATENTSCHRIFT

(11) **EP 1 580 031 B1**
(45) Veröffentlichungstag und Bekanntmachung des Hinweises auf die Patenterteilung: **30.11.2011**
(21) Anmeldenummer: 04007318.1
(22) Anmeldetag: 26.03.2004
(51) Int. Cl.: B60C 11/04

(54) **Fahrzeugluftreifen**
Pneumatic tyre
Bandage pneumatique

(43) Veröffentlichungstag der Anmeldung: 28.09.2005
(73) Patentinhaber: Continental Reifen Deutschland GmbH, 30165 Hannover (DE)
(72) Erfinder: Metz, Markus, 31535 Neustadt (DE)
(74) Vertreter: Finger, Karsten

(56) Entgegenhaltungen:
- WO-A-02/068222
- FR-A- 1 301 402
- US-A1- 2003 010 417

## Beschreibung

Die Erfindung betrifft einen Fahrzeugreifen - insbesondere Fahrzeugluftreifen - mit einem Laufflächenprofil mit wenigstens einer Profilrippe und/oder mit wenigstens einer Profilblockreihen mit mehreren in Umfangsrichtung hintereinander angeordneten Profilblockelementen, mit einem oder mehreren Einschnitten in der radialen Außenseite der Profilrippe bzw. von Profilblockelementen der Profilblockreihe.

Derartige Einschnitte bilden zusätzliche Traktionskanten im Profil, wodurch Traktion und somit Beschleunigungs- und Bremswirkung insbesondere auf reibungsreduzierter Oberfläche erhöht werden kann. Dabei ist sowohl Kantenwirkung in Umfangsrichtung des Fahrzeugreifens als auch in Seitenrichtung wünschenswert. Mit abnehmender Profiltiefe aufgrund des Abriebs während der Lebensdauer des Fahrzeugreifens erhöht sich die Steifigkeit der verbleibenden Profilblockelemente einer Profilblockreihe bzw. einer Profilrippe, wodurch die Traktion verändert wird.

Aus der FR 1,301,402 ist es bekannt in Umfangsrippen von Fahrzeugreifen langlochförmig konturierte Vertiefungen auszubilden, wobei die Haupterstreckungsachse des Langlochs in Umfangsrichtung gerichtet ist.

Der Erfindung liegt die Aufgabe zugrunde, bei einem Fahrzeugreifen - insbesondere Fahrzeugluftreifen - mit einem Laufflächenprofil mit wenigstens einer Profilrippe und/oder mit wenigstens einer Profilblockreihen mit mehreren in Umfangsrichtung hintereinander angeordneten Profilblockelementen, mit einem oder mehreren Einschnitten in der radialen Außenseite der Profilrippe bzw. von Profilblockelementen der Profilblockreihe, vergleichmäßigte Traktion zu ermögichen.

Die Aufgabe wird erfindungsgemäß durch die Ausbildung eines Fahrzeugreifen - insbesondere Fahrzeugluftreifen - mit einem Laufflächenprofil mit wenigstens einer Profilrippe und/oder mit wenigstens einer Profilblockreihen mit mehreren in Umfangsrichtung hintereinander angeordneten Profilblockelementen, mit einem oder mehreren Einschnitten in der radialen Außenseite der Profilrippe bzw. von Profilblockelementen der Profilblockreihe, gemäß den Merkmalen des Anspruchs 1 gelöst, wobei der Einschnitt in jeder radialen Position seiner radialen Erstreckung ausgehend vom Einschnittsgrund nach radial außen über seine gesamte radiale Erstreckung jeweils mit einer linsenquerschnittsförmigen, aus einer ersten und aus einer zweiten gegenläufig gekrümmten und sich in zwei Schnittpunkten (S1, S₂₀, S₂₂, S₂₁, S₁₈) schneidenden Linien gebildeten Kontur ausgebildet ist und wobei der Einschnitt mit in radialer Richtung von innen vom Einschnittsgrund nach außen hin zunehmendem Umfang der Linsenquerschnittsform ausgebildet ist. Die linsenförimige Kontur ermöglicht durch die gegenläufig gekrümmten Kanten eine gleichmäßige, hohe Traktionswirkung in beide Umfangs- und Seitenrichtungen und die Ausnutzung des Schereffektes auf nassen, schlammigen oder schneebedeckten Straßen, bei dem das in die Einschnitte eindringende Material die Einschnittskanten auseinanderhält. Durch Ausbildung mit nach radial außen hin zunehmendem Umfang der linsenförmigen Kontur ist die Traktionswirkung, die durch den Einschnitt erzielt wird beim Neureifen, das heißt in dem Zustand des Fahrzeugreifen, bei dem die Steifigkeit der Profilelemente einer Profilblockreihe bzw einer Profilrippe am geringsten ist, am größten und nimmt mit der Lebensdauer gegenläufig zur Steifigkeit der Profilelemente einer Profilblockreihe bzw einer Profilrippe ab. Hierdurch kann das durch die linsenform bedingte gleichmäßige Traktionsverhalten auch über die Lebensdauer vergleichmäßigt werden.

Besonders vorteilhaft ist die Ausbildung gemäß den Merkmalen von Anspruch 2, wobei jeweils einer (S₁) der beiden Schnittpunkte (S₁, S₂₀, S₂₂, S₂₁, S₁₈) in jeder radialen Position des Einschnitts auf einer gemeinsamen in radiale Richtung des Fahrzeugluftreifens ausgerichteten Geraden ausgebildet ist.

Die Ausbildung gemäß den Merkmalen von Anspruch 3, wobei der Einschnitt über seine gesamte radiale Erstreckung mit in radialer Richtung von innen vom Einschnittsgrund nach außen hin zunehmender Länge der Haupterstreckung der Linsenquerschnittsform ausgebildet ist, stellt eine bevorzugte Ausführung der Erfindung dar.

Die Ausbildung gemäß den Merkmalen von Anspruch 4, wobei in jeder radialen Position der radialen Erstreckung des Einschnitts die Krümmung der beiden gekrümmten, die linsenquerschnittsförmige Kontur bildenden Linien jeweils kreisbogenförmig gekrümmt ausgebildet ist, stellt eine bevorzugte Ausführung der Erfindung dar.

Die Ausbildung gemäß den Merkmalen von Anspruch 5, wobei in jeder radialen Position der radialen Erstreckung des Einschnitts die Krümmung der ersten der beiden gekrümmten, die linsenquerschnittsförmige Kontur bildenden Linien jeweils kreisbogenförmig gekrümmt und die Krümmung der zweiten der beiden gekrümmten, die linsenquerschnittsförmige Kontur bildenden Linien jeweils kreisbogenförmig gekrümmt ist und wobei in jeder radialen Position der radialen Erstreckung des Einschnitts jeweils der Krümmungsradius der ersten und der Krümmungsradius der zweiten die Krümmung die linsenquerschnittsförmige Kontur bildenden Linien gleich groß ausgebildet sind.

Die Ausbildung gemäß den Merkmalen von Anspruch 6, wobei der Krümmungsradius der ersten und der Krümmungsradius der zweiten die Krümmung die linsenquerschnittsförmige Kontur bildenden Linien aller radialer Positionen der radialen Erstreckung des Einschnitts gleich groß ausgebildet sind.

Die Ausbildung gemäß den Merkmalen von Anspruch 7, wobei jeweils die Krümmungsmittelpunkte der Krümmung der ersten kreisbogenförmig gekrümmten Linie aller radialen Positionen der radialen Erstreckung des Einschnitts auf einer gemeinsamen Zylindermantelfläche eines Zylinders mit in radialer Richtung des Fahrzeugreifens ausgerichteter Zylinderachse ausgebildet sind.

Die Ausbildung gemäß den Merkmalen von Anspruch 8, wobei jeweils einer (S₁) der beiden Schnittpunkte (S₁, S₂₀, S₂₂, S₂₁, S₁₈) in jeder radialen Position des Einschnitts auf der Zylinderachse angeordnet sind.

Die Ausbildung gemäß den Merkmalen von Anspruch 9, wobei der Krümmungsradius der ersten und der Krümmungsradius der zweiten die Krümmung die linsenquerschnittsförmige Kontur bildenden Linien aller radialer Positionen der radialen Erstreckung des Einschnitts sowie der Radius des Zylinders gleich groß ausgebildet sind.

Die Erfindung wird im Folgenden an Hand der in den Figuren 1 bis 9 dargestellten Ausführungsbeispiele näher erläutert. Hierin zeigen
- Fig. 1:: perspektivische Darstellung eines Fahrzeugluftreifens mit profiliertem Laufstreifen,
- Fig. 2:: ausschnittsweise Darstellung des Laufflächenprofils von Fig. 1 in Draufsicht,
- Fig. 3:: vergrößerte Darstellung eines Ausschnitts von Fig. 2,
- Fig. 4:: vergröerte Darstellung eines Ausschnitts des Laufflächenprofils von Fig. 3 mit linsenförmigem Feineinschnitt,
- Fig. 5:: Schnittdarstellung des linsenförmigen Feineinschnitts gemäß Schnitt V-V von Fig. 4,
- Fig. 6:: Schnittdarstellung des linsenförmigen Feineinschnitts gemäß Schnitt VI-VI von Fig. 4,
- Fig. 7:: Schnittdarstellung des linsenförmigen Feineinschnitts gemäß Schnitt VII-VII von Fig. 4,
- Fig. 8:: Schnittdarstellung des linsenförmigen Feineinschnitts gemäß Schnitt VIII-VIII von Fig. 4,
- Fig. 9:: schematische Darstellung zur Erläuterung der Konturenauslegung des linsenförmigen Feineinschnitts von Fig. 4.

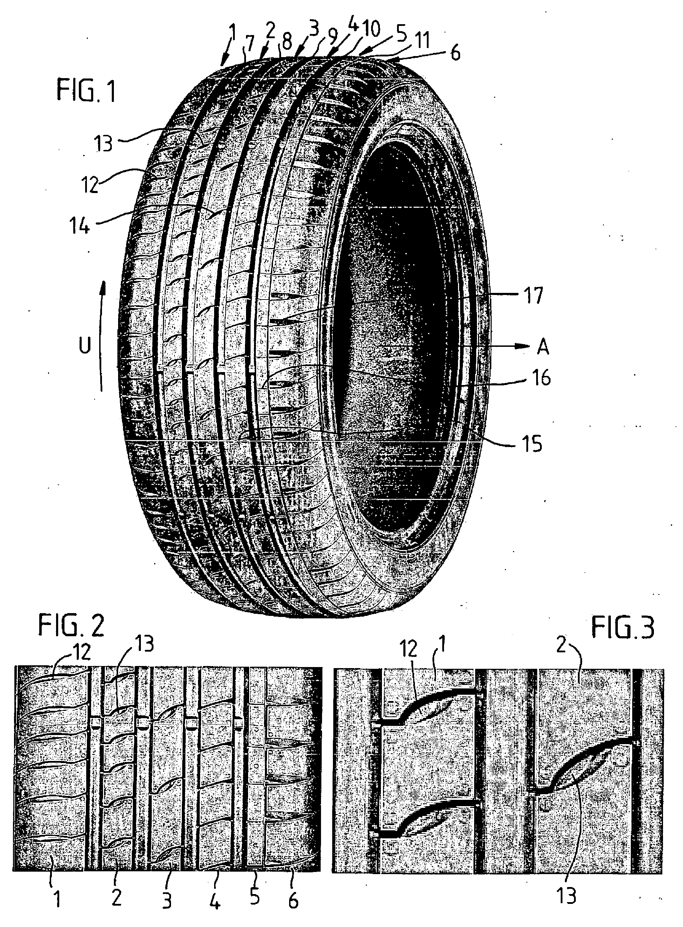

Figur 1 zeigt einen Fahrzeugluftreifen mit assymetrischem, profiliertem Laufstreifen. Das Laufstreifenprofil weist beispielhaft sechs parallele Umfangsrippen 1, 2, 3, 4, 5 und 6 auf, die sich in bekannter Weise in Umfangsrichtung U ausgerichtet jeweils über den gesamten Umfang des Fahrzeugluftreifens erstrecken und in bekannter Weise in Achsrichtung A des Fahrzeugluftreifens jeweils durch geradlinig in Umfangsrichtung U ausgerichtete über den gesamten Umfang erstreckte Umfangsrillen 7, 8, 9, 10 und 11 von einander getrennt sind.

Die beiden axial äußeren Umfangsrippen 1 und 6 sind Schulterumfangsrippen. Die Umfangsrille 11 ist in ihrer in axialer Richtung erstreckten Breite beispielhaft schmaler ausgebildet als die anderen Umfangsrillen 7, 8, 9 und 10 ausgebildet. Beispielsweise ist die Breite der Umfangsrille 11 ein Viertel bis ein Zehntel so groß wie die Breite der anderen Umfangsrillen 7, 8, 9 und 10.

In der Umfangsrippe 1 sind über den Umfang des Fahrzeugluftreifens verteilt ausgehend von der Umfangsrille 7 über die gesamte axiale Breite der Umfangsrippe 1 erstreckte quer verlaufende Feineinschnitte 12 ausgebildet. In der Umfangsrippe 2 sind über den Umfang des Fahrzeugluftreifens verteilt ausgehend von der Umfangsrille8 bis zur Umfangsrille 7 über die gesamte axiale Breite der Umfangsrippe 2 erstreckte quer verlaufende Feineinschnitte 13 ausgebildet. In der Umfangsrippe 3 sind über den Umfang des Fahrzeugluftreifens verteilt ausgehend von der Umfangsrille 9 bis zur Umfangsrille 8 über die gesamte axiale Breite der Umfangsrippe 3 erstreckte quer verlaufende Feineinschnitte 14 ausgebildet. In der Umfangsrippe 4 sind über den Umfang des Fahrzeugluftreifens verteilt ausgehend von der Umfangsrille 10 bis zur Umfangsrille 9 über die gesamte axiale Breite der Umfangsrippe 4 erstreckte quer verlaufende Feineinschnitte 15 ausgebildet. In der Umfangsrippe 5 sind über den Umfang des Fahrzeugluftreifens verteilt ausgehend von der Umfangsrille 11 bis zur Umfangsrille 10 über die gesamte axiale Breite der Umfangsrippe 5 erstreckte quer verlaufende Feineinschnitte 16 ausgebildet. In der Umfangsrippe 6 sind über den Umfang des Fahrzeugluftreifens verteilt ausgehend von der Umfangsrille 11 über die gesamte axiale Breite der Umfangsrippe 6 erstreckte quer verlaufende Feineinschnitte 17 ausgebildet.

Die Feineinschnitte 12, 13 und 14 bilden beabstandet zu den jeweils benachbarten Umfangsrillen 7, 8 und linsenkonturförmige Vertiefungen in der jeweiligen Profilrippe 1,2 bzw. 3.

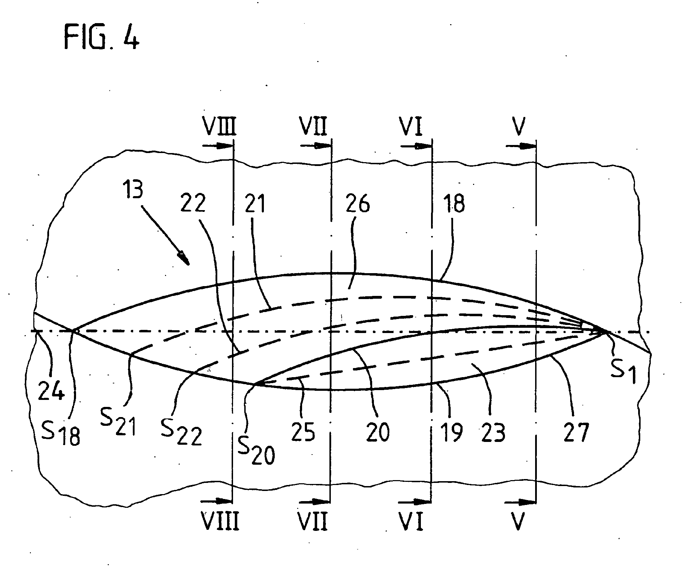

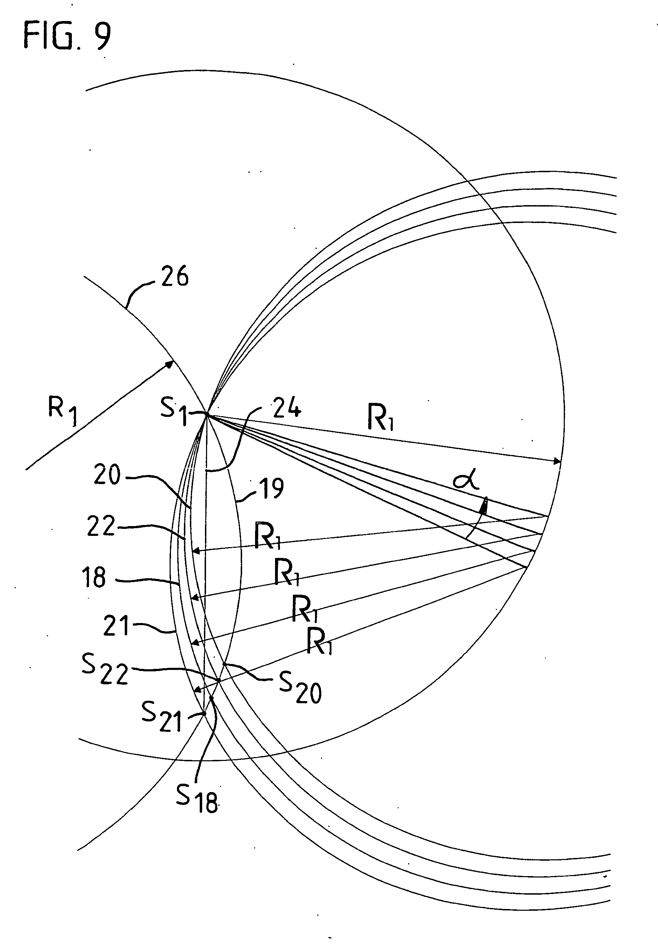

In den Figuren 4 bis 9 ist beispielhaft am linsenförmigen Feineinschnitt 13 die Ausbildung der linsenförmigen Feineinschnitte 12, 13 und 14 dargestellt. Der linsenförmige Feineinschnitt 13 erstreckt sich vom Einschnittsgrund 23 radial nach außen und ist beiderseits von zwei gekrümmten Wänden 26, 27 begrenzt. Die Wand 27 bildet eine um einen Radius R₁ gekrümmte Zylindermantelsegmentfläche. Die Wand 26 ist über ihre gesamte radiale Erstreckung ausgehend vom Einschnittsgrund 23 nach radial außen in allen Schnittebenen senkrecht zur radialen Erstreckung jeweils ebenfalls mit dem Krümmungsradius R₁ gekrümmt ausgebildet. Beispeilhaft sind in den Figuren 4 bis 9 die Krümmungskonturen der Wand 27 in den Schnittebenen senkrecht zur radialen Erstreckung in vier verschiedenen radialen Erstreckungspositionen dargestellt. Dabei ist die Kreiskonturlinie 20 die Krümmungskontur der Wand 27 in der Schnittebenen senkrecht zur radialen Erstreckung im Einschnittsgrund 23, die Kreiskonturlinie 22 ist die Krümmungskontur der Wand 27 in der Schnittebene senkrecht zur radialen Erstreckung in einer radial weiter außerhalb gelegenen Querschnittsebene, die Kreiskonturlinie 21 ist die Krümmungskontur der Wand 27 in der Schnittebene senkrecht zur radialen Erstreckung in einer radial noch weiter außerhalb gelegenen Querschnittsebene und die Kreiskonturlinie 18 ist die Krümmungskontur der Wand 27 in der Schnittebenen senkrecht zur radialen Erstreckung in der die Kontaktfläche zur Straßenoberfläche bildenden radialen Querschnittsebene der Profilrippe 2. In allen Querschnittsebenen senkrecht zur radialen Erstreckung des Feineinschnitts schneiden sich die Kreise der Kreiskonturlinien der Wand 26 und der der Kreiskonturlinien der Wand 27 jeweils in zwei Schnittpunkten. Der erste Schnittpunkt S₁ liegt in allen Querschnittsebenen in gleicher Umfangsposition und in gleicher axialer Position des Fahrzeugluftreifens, so dass die ersten Schnittpunkte S₁ alle eines Feineinschnitts alle auf einer gemeinsamen radial erstreckten Gerade liegen. Die Kreiskonturlinie 20 der Wand 27 schneidet die Wand 26 in der Schnittebenen senkrecht zur radialen Erstreckung im Einschnittsgrund 23 im zweiten Schnittpunkt S₂₀, die Kreiskonturlinie 22 der Wand 27 schneidet die Wand 26 im zweiten Schnittpunkt S₂₂, die Kreiskonturlinie 21 der Wand 27 schneidet die Wand 26 im zweiten Schnittpunkt S₂₁ und die Kreiskonturlinie 18 der Wand 27 schneidet die Wand 26 im zweiten Schnittpunkt S₁₈ in der die Kontaktfläche zur Straßenoberfläche bildenden senkrecht zur Radialen gebildeten Querschnittsebene der Profilrippe 2. Die Mittelpunkte der Kreislinien - dargestellt anhand der Kreislinien 20,22,21 und 18 - aller radialen Querschnittsebenen der Wand 26 liegen jeweils auf einer Kreiszylindermantelfläche eines Zylinders mit dem Radius R₁ um die die Schnittpunkte S₁ beinhaltende Radiale. Wie in Fig. 9 zu erkennen ist, wandern die Mittelpunkte der Krümmungskreiskonturen der Wand 26 ausgehend von der Kontur 18 in der radial innersten Schnittsebene senkrecht zur Radialen bis zur radial äußersten Kontur 20 in der radial äußersten Schnittsebene senkrecht zur Radialen mit zunehmendem radialer Position mit konstanter Winkelzunahme des Winkels α auf der Mantelfläche des um die die Schnittpunkte S₁ beinhaltenden Zylinders.

Wie in Fig. 4 anhand der Konturen 19, 18, 21, 22, 20 deutlich zu erkennen ist, ist in allen radialen Schnittsebenen senkrecht zur radialen Erstreckung des Feineinschnitts der Feineinschnitt achssymmetrisch zur jeweiligen zwischen den Schnittpunkten S₁ und S₁₈, S₁ und S₂₁, S₁ und S₂₂ bzw. S₁ und S₂₀ gebildeten Sekante ausgebildet.

Von der radial äußersten Sekante 24 zwischen S₁ und S₁₈ zur radial innersten Sekante 25 zwischen S₁ und S₂₀ nimmt die Sekantenlänge und die Umfangslänge der in der Schnittebene senkrecht zur radialen Erstreckung des Feineinschnitts gebildeten Linsenform der Schnittkontur des Feineinschnitts ab. Mit zunehmender Lebensdauer des Fahrzeugluftreifens reduziert sich aufgrund des Abriebs die verbleibende Einschnitttiefe, wobei die Linsenform in der die Straßenkontaktfläche bildenden radialen Querschnittsebene linsenförmig bleibt.

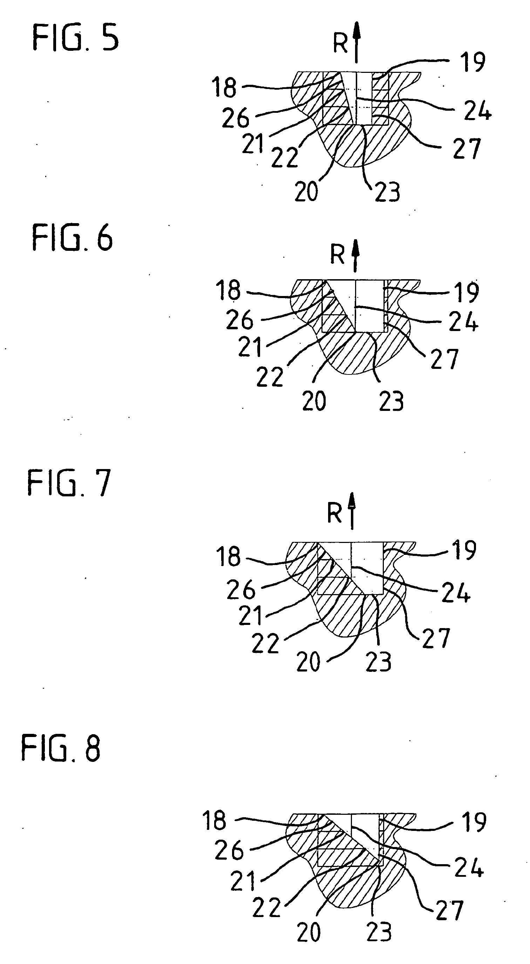

In einer Ausführungsform, die in den Figuren 5 bis 8 dargestellt ist, ist in den Querschnittsebenen senkrecht zur Sekante 24 die Wand 26 mit geradlinigem Konturverlauf ausgebildet.

In einer weiteren Ausführungsform sind die Querschnittskonturen der Wand 26 in den senkrechten Ebenen zu den durch die beiden Schnittpunkte der Kreiskrümmungskonturen der Wände 26 und 27 gebildeten Sekanten in allen Querschnittsebenen senkrecht zur radialen Erstreckung des Feineinschnitts geradlinig ausgebildet.

Wie in den Figuren 1 bis 3 dargestellt ist, ist der Feineinschnitt zu beiden Seiten außerhalb der Linsenform jeweils in Form der Krümmung einer der beiden Wände 26 bzw. 77 zur benachbarten Umfangsrille hin verlängert.

Der Umfang der Linsenkontur verändert sich jeweils über die Erstreckung des Feineinschnitts 12, 13, 14 in radialer Richtung des Fahrzeugluftreifens. Bei Beibehaltung der Linsenkontur nimmt der Umfang der Linsenkontur mit der radialen Tiefe des Feineinschnitts 12, 13, 14 ausgehend von der radialen Außenfläche des Fahrzeugluftreifens bis zum Grund des Feineinschnitts 12, 13, 14 ab.

### Bezugszeichenliste

### (Teil der Beschreibung)

- 1: Schulterprofilrippe
- 2: Profilrippe
- 3: Profilrippe
- 4: Profilrippe
- 5: Profilrippe
- 6: Schulterprofilrippe
- 7: Umfangsrillle
- 8: Umfangsrillle
- 9: Umfangsrillle
- 10: Umfangsrillle
- 11: Umfangsrillle
- 12: Feineinschnitt
- 13: Feineinschnitt
- 14: Feineinschnitt
- 15: Feineinschnitt
- 16: Feineinschnitt
- 17: Feineinschnitt
- 18: Einschnittskonturlinie
- 19: Einschnittskonturlinie
- 20: Einschnittskonturlinie
- 21: Einschnittskonturlinie
- 22: Einschnittskonturlinie
- 23: Einschnittsgrund
- 24: Sekante
- 25: Sekante
- 26: Wand
- 27: Wand

## Patentansprüche

1. Fahrzeugreifen - insbesondere Fahrzeugluftreifen - mit einem Laufflächenprofil mit wenigstens einer Profilrippe (1,2,3,4,5) und/oder mit wenigstens einer Profilblockreihen mit mehreren in Umfangsrichtung hintereinander angeordneten Profilblockelementen,
mit einem oder mehreren Einschnitten (12,13,14,15,16) in der radialen Außenseite der Profilrippe bzw. von Profilblockelementen der Profilblockreihe,
**dadurch gekennzeichnet, dass**
der Einschnitt (12,13,14,15,16) in jeder radialen Position seiner radialen Erstreckung ausgehend vom Einschnittsgrund (23) nach radial außen über seine gesamte radiale Erstreckung jeweils in Form einer linsenquerschnittsförmigen, aus einer ersten und aus einer zweiten gegenläufig gekrümmten und sich in zwei Schnittpunkten (S₁, S₂₀, S₂₂, S₂₁, S₁₈) schneidenden Linien gebildeten Kontur ausgebildet ist,
wobei der Einschnitt (12,13,14,15,16) mit in radialer Richtung von innen vom Einschnittsgrund (23) nach außen hin zunehmendem Umfang der Linsenquerschnittsform ausgebildet ist.

2. Fahrzeugreifen gemäß den Merkmalen von Anspruch 1,
wobei jeweils einer (S₁) der beiden Schnittpunkte (S₁, S₂₀, S₂₂, S₂₁, S₁₈) in jeder radialen Position des Einschnitts auf einer gemeinsamen in radiale Richtung des Fahrzeugluftreifens ausgerichteten Geraden ausgebildet ist.

3. Fahrzeugreifen gemäß den Merkmalen von Anspruch 1 oder 2,
wobei der Einschnitt über seine gesamte radiale Erstreckung mit in radialer Richtung von innen vom Einschnittsgrund nach außen hin zunehmender Länge der Haupterstreckung der Linsenquerschnittsform ausgebildet ist.

4. Fahrzeugreifen gemäß den Merkmalen von Anspruch 1,2 oder 3,
wobei in jeder radialen Position der radialen Erstreckung des Einschnitts die Krümmung der beiden gekrümmten, die linsenquerschnittsförmige Kontur bildenden Linien jeweils kreisbogenförmig gekrümmt ausgebildet ist.

5. Fahrzeugreifen gemäß den Merkmalen von Anspruch 4,
wobei in jeder radialen Position der radialen Erstreckung des Einschnitts die Krümmung der ersten der beiden gekrümmten, die linsenquerschnittsförmige Kontur bildenden Linien jeweils kreisbogenförmig gekrümmt und die Krümmung der zweiten der beiden gekrümmten, die linsenquerschnittsförmige Kontur bildenden Linien jeweils kreisbogenförmig gekrümmt ist,
wobei in jeder radialen Position der radialen Erstreckung des Einschnitts jeweils der Krümmungsradius der ersten und der Krümmungsradius der zweiten die Krümmung die linsenquerschnittsförmige Kontur bildenden Linien gleich groß ausgebildet sind.

6. Fahrzeugreifen gemäß den Merkmalen von Anspruch 5,
wobei der Krümmungsradius der ersten und der Krümmungsradius der zweiten die Krümmung die linsenquerschnittsförmige Kontur bildenden Linien aller radialer Positionen der radialen Erstreckung des Einschnitts gleich groß ausgebildet sind.

7. Fahrzeugreifen gemäß den Merkmalen von einem oder mehreren der Ansprüche 4 bis 6,
wobei jeweils die Krümmungsmittelpunkte der Krümmung der ersten kreisbogenförmig gekrümmten Linie aller radialen Positionen der radialen Erstreckung des Einschnitts auf einer gemeinsamen Zylindermantelfläche eines Zylinders mit in radialer Richtung des Fahrzeugreifens ausgerichteter Zylinderachse ausgebildet sind.

8. Fahrzeugreifen gemäß den Merkmalen von Anspruch 7,
wobei jeweils einer (S₁) der beiden Schnittpunkte (S₁,S₂₀, S₂₂, S₂₁, S₁₈) in jeder radialen Position des Einschnitts auf der Zylinderachse angeordnet sind.

9. Fahrzeugreifen gemäß den Merkmalen von Anspruch 8,
wobei der Krümmungsradius der ersten und der Krümmungsradius der zweiten die Krümmung die linsenquerschnittsförmige Kontur bildenden Linien aller radialer Positionen der radialen Erstreckung des Einschnitts sowie der Radius des Zylinders gleich groß ausgebildet sind.

## Claims

1. Vehicle tyre - in particular a pneumatic vehicle tyre - with a tread profile with at least one profile rib (1, 2, 3, 4, 5) and/or with at least one row of profile blocks with a number of profile block elements arranged one behind the other in the circumferential direction,
with one or more sipes (12, 13, 14, 15, 16) in the radial outer side of the profile rib or of profile block elements of the row of profile blocks,
**characterized in that**
the sipe (12, 13, 14, 15, 16) is formed in each radial position of its radial extent, extending radially outwards from the sipe base (23) over its entire radial extent, respectively in the form of a cross-sectionally lenticular contour, formed by a first and a second line that are oppositely curved and intersect at two points of intersection (S₁, S₂₀, S₂₂, S₂₁, S₁₈),
wherein the sipe (12, 13, 14, 15, 16) is formed with the circumference of the lenticular cross-sectional shape increasing from the inside outwards in the radial direction from the sipe base (23).

2. Vehicle tyre according to the features of Claim 1, wherein one (S₁) of the two points of intersection (S₁, S₂₀, S₂₂, S₂₁, S₁₈) in each radial position of the sipe is respectively formed on a common straight line aligned in the radial direction of the pneumatic vehicle tyre.

3. Pneumatic tyre according to the features of Claim 1 or 2,
wherein the sipe is formed over its entire radial extent with the length of the main extent of the lenticular cross-sectional shape increasing from the inside outwards in the radial direction from the sipe base.

4. Vehicle tyre according to the features of Claim 1, 2 or 3,
wherein, in each radial position of the radial extent of the sipe, the curvature of the two curved lines forming the cross-sectionally lenticular contour is respectively formed in an arcuately curved manner.

5. Vehicle tyre according to the features of Claim 4, wherein, in each radial position of the radial extent of the sipe, the curvature of the first of the two curved lines forming the cross-sectionally lenticular contour is respectively curved in an arcuate manner and the curvature of the second of the two curved lines forming the cross-sectionally lenticular contour is respectively curved in an arcuate manner,
wherein, in each radial position of the radial extent of the sipe, the radius of curvature of the first line and the radius of curvature of the second line, forming the curvature of the cross-sectionally lenticular contour, are formed such that they are of the same size.

6. Vehicle tyre according to the features of Claim 5, wherein the radius of curvature of the first line and the radius of curvature of the second line, forming the curvature of the cross-sectionally lenticular contour, of all the radial positions of the radial extent of the sipe are formed such that they are of the same size.

7. Vehicle tyre according to the features of one or more of Claims 4 to 6,
wherein the centres of curvature of the first arcuately curved line of all the radial positions of the radial extent of the sipe are respectively formed on a common lateral surface of a cylinder with a cylinder axis aligned in the radial direction of the vehicle tyre.

8. Vehicle tyre according to the features of Claim 7, wherein one (S₁) of the two points of intersection (S₁, S₂₀, S₂₂, S₂₁, S₁₈) in each radial position of the sipe is respectively arranged on the cylinder axis.

9. Vehicle tyre according to the features of Claim 8, wherein the radius of curvature of the first line and the radius of curvature of the second line, forming the curvature of the cross-sectionally lenticular contour, of all the radial positions of the radial extent of the sipe and the radius of the cylinder are formed such that they are of the same size.

## Revendications

1. Bandage pour roue de véhicule, en particulier bandage pneumatique pour roue de véhicule, présentant
un profil de surface de roulement doté d'au moins une nervure profilée (1, 2, 3, 4, 5) et/ou d'au moins une rangée de blocs profilés qui présente plusieurs éléments de blocs profilés disposés les uns derrière les autres dans la direction périphérique et
une ou plusieurs entailles (12, 13, 14, 15, 16) disposées sur le côté radialement extérieur de la nervure profilée ou des éléments de blocs profilés de la rangée de blocs profilés,
**caractérisé en ce que**
en toute position radiale de son extension radiale, partant du fond (23) de l'entaille et radialement vers l'extérieur sur toute son extension radiale, l'entaille (12, 13, 14, 15, 16) est configurée avec un contour dont la section transversale a la forme d'une lentille et formé d'une première et d'une deuxième ligne à courbures opposées et se coupant en deux points d'intersection (S₁, S₂₀, S₂₂, S₂₁, S₁₈), le périmètre de la section transversale en forme de lentille de l'entaille (12, 13, 14, 15, 16) augmentant dans la direction radiale de l'intérieur vers l'extérieur en partant du fond (23) de l'entaille.

2. Bandage pour roue de véhicule selon les caractéristiques de la revendication 1, dans lequel l'un (S₁) des deux points d'intersection (S₁, S₂₀, S₂₂, S₂₁, S₁₈) est configuré dans chaque position radiale de l'entaille sur une droite commune orientée dans la direction radiale du bandage pneumatique pour roue de véhicule.

3. Bandage pour roue de véhicule selon les caractéristiques des revendications 1 ou 2, dans lequel l'entaille est configurée sur toute son extension radiale avec une longueur de l'extension principale de la section transversale en forme de lentille qui augmente dans la direction radiale de l'intérieur vers l'extérieur en partant du fond de l'entaille.

4. Bandage pour roue de véhicule selon les caractéristiques des revendications 1, 2 ou 3, dans lequel en toute position radiale de l'extension radiale de l'entaille, la courbure des deux lignes courbes qui forme le contour de la section transversale en forme de lentille est configurée en arc de cercle.

5. Bandage pour roue de véhicule selon les caractéristiques de la revendication 4, dans lequel en toute position radiale de l'extension radiale de l'entaille, la courbure de la première des deux lignes courbes qui forme le contour de section transversale en forme de lentille est en arc de cercle et la courbure de la deuxième des deux lignes courbes qui forme le contour de la section transversale en forme de lentille est en arc de cercle et
en toute position radiale de l'extension radiale de l'entaille, le rayon de courbure de la première ligne qui forme le contour de section transversale en forme de lentille et le rayon de courbure de la deuxième ligne qui forme le contour de la section transversale en forme de lentille ont la même valeur.

6. Bandage pour roue de véhicule selon les caractéristiques de la revendication 5, dans lequel le rayon de courbure de la première ligne qui forme le contour de la section transversale en forme de lentille et le rayon de courbure de la deuxième ligne qui forme le contour de la section transversale en forme de lentille ont la même valeur dans toutes les positions radiales de l'extension radiale de l'entaille.

7. Bandage pour roue de véhicule selon les caractéristiques de l'une ou plusieurs des revendications 4 à 6, dans lequel en toutes les positions radiales de l'extension radiale de l'entaille sur une surface cylindrique d'enveloppe commune d'un cylindre, le point central de la courbure de la première ligne courbée en arc de cercle est configuré avec un axe de cylindre orienté dans la direction radiale du bandage de roue de véhicule.

8. Bandage pour roue de véhicule selon les caractéristiques de la revendication 7, dans lequel en toute position radiale de l'entaille, un (S₁) des deux points d'intersection (S₁, S₂₀, S₂₂, S₂₁, S₁₈) est disposé sur l'axe du cylindre.

9. Bandage pour roue de véhicule selon les caractéristiques de la revendication 8, dans lequel le rayon de courbure de la première ligne qui forme le contour de section transversale en forme de lentille, le rayon de courbure de la deuxième ligne qui forme le contour de la section transversale en forme de lentille et le rayon du cylindre ont la même valeur dans toutes les positions radiales de l'extension radiale de l'entaille.
